# EUROPEAN PATENT SPECIFICATION

(11) **EP 3 451 825 B1**
(45) Date of publication and mention of the grant of the patent: **21.08.2024**
(21) Application number: 17793485.8
(22) Date of filing: 05.05.2017
(51) Int. Cl.: A01K 13/00

(54) **GROOMING TOOL**
PFLEGEVORRICHTUNG
OUTIL DE TOILETTAGE

(30) Priority: 06.05.2016 US 201662333001 P
(43) Date of publication of application: 13.03.2019
(73) Proprietor: Riman, Jeffrey, Plantation, FL 33324 (US)
(72) Inventor: Riman, Jeffrey, Plantation, FL 33324 (US)
(74) Representative: FRKelly
(86) International application number: PCT/US2017/031373
(87) International publication number: WO 2017/193045

(56) References cited:
- GB-A- 2 299 924
- US-A- 309 668
- US-A- 413 662
- US-A- 413 662
- US-A- 479 457
- US-A- 5 584 123
- US-A1- 2009 025 647
- US-A1- 2009 320 767
- US-A1- 2011 067 644
- US-B1- 9 474 250
- US-S- D 154 784

## Description

### BACKGROUND OF THE INVENTION

### 1. Field of the Invention

The present invention relates to a grooming tool for animals with hair or fur, specifically to a device for removing loose hair or fur.

### 2. Description of the Related Art.

Throughout this patent application, the term "fur" shall mean "hair" and/or "fur". The problem of shedding and loose fur is long known. For a grooming tool to be effective, it must remove matted, loose and/or disconnected fur from the animal and fur that is still loosely connected to the animal's skin.

Animals such as dogs and cats have coats that tend to molt or shed fur. A tool that can remove detached or almost detached fur, while leaving live, secure fur in place, is preferred to a brush, which is often ineffective and may be painful to the animal.

Many pet owners and pet groom ers employ combs, brushes and sticky devices similar to tools for removing lint from clothing. Some prior art inventions pass a toothed blade through a pet's fur coat to remove the detached hairs. Some have mounted a serrated blade to a handle, like the Furminator Pet Grooming Tool (disclosed in U.S. Pat. No. 7,509,926), for perceived better gripping and handling of the toothed blade. Other prior art inventions include an array of protrusions which can gather loose fur from the animal. US413662 discloses a combined curry-comb and brush. US309668 discloses a curry-comb.

However, the disclosed prior art inventions are unwieldy, ineffective and inefficient. Furthermore, the prior art inventions are bulky and difficult to control. In addition, the fur removal from the prior art having a blade requires a user to remove fur from the blade with the user's fingers, which may be dangerous to a user or animal if the user is not very careful or if an animal moves suddenly during the removal process.

Thus, it can be seen that there remains a need for a grooming tool which is easier to handle, more effective and more efficient than existing grooming tools.

### SUMMARY OF THE INVENTION

The invention is set out in the appended claims.

Generally speaking, the present invention relates to a new elongated, cylindrical grooming tool with an elongated outer surface having protrusions located at one end and blades attached to the second end is provided. The grooming tool has retractable blades and a sliding actuator. The tool is compact and easy to control because the body of the tool itself is used for the handle for the user and because multiple blades may be used simultaneously. The use of multiple blades in the same tool make this invention highly efficient. In addition, the ability to retract the blades makes fur removal both safe and effective.

Accordingly, it is an object of the invention to provide a grooming tool for pets, such as dogs and cats, which overcomes drawbacks of the prior art.

Another object of the invention is to provide a compact and efficient grooming tool.

Still other objects and advantages of the invention will in part be obvious and will in part be apparent from the specification and drawings.

### BRIEF DESCRIPTION OF THE DRAWINGS

The accompanying drawings, which are incorporated in and constitute part of this specification, illustrate embodiments of the invention and together with the description, serve to explain the principles of the invention. The embodiments illustrated are examples. It is understood that the invention is not limited to the precise arrangements and instrumentalities shown, wherein:
Figure 1 is a top view of an embodiment which is not in accordance with the claimed invention.
Figure 2 is a side view of an embodiment of the invention.
Figure 3 is an end perspective view of an embodiment of the invention.
Figure 4 is a perspective schematic end view of an embodiment of the invention revealing the interior surface of the invention.
Figure 5 is a perspective schematic end view of an embodiment of the invention revealing the interior surface of the invention with the blades in a fully partially setting.
Figure 6 is a perspective schematic end view of an embodiment of the invention with the blades in a fully activated setting.
Figure 7 is a perspective schematic end view of an embodiment of the invention with the blades in a deactivated setting.

### DETAILED DESCRIPTION OF THE INVENTION

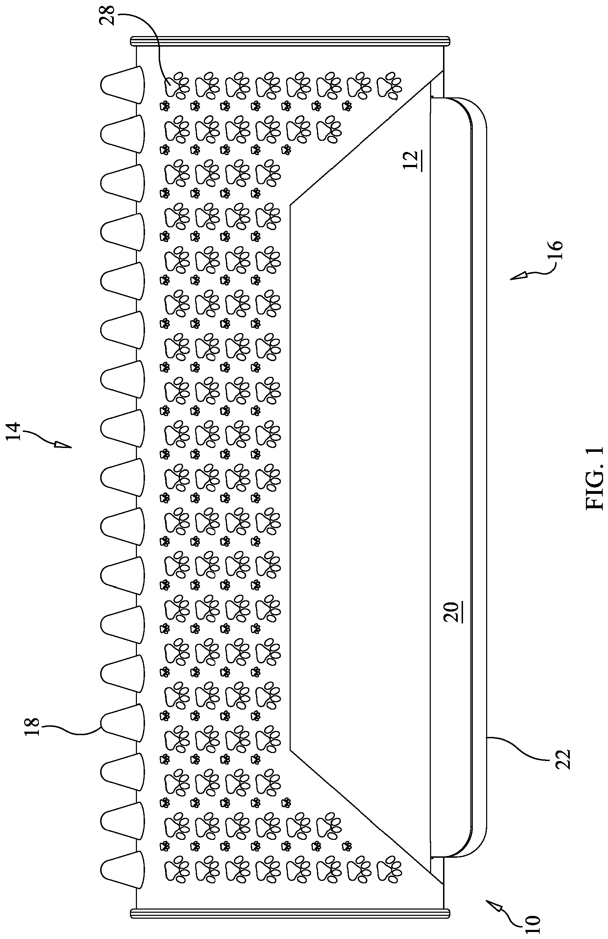

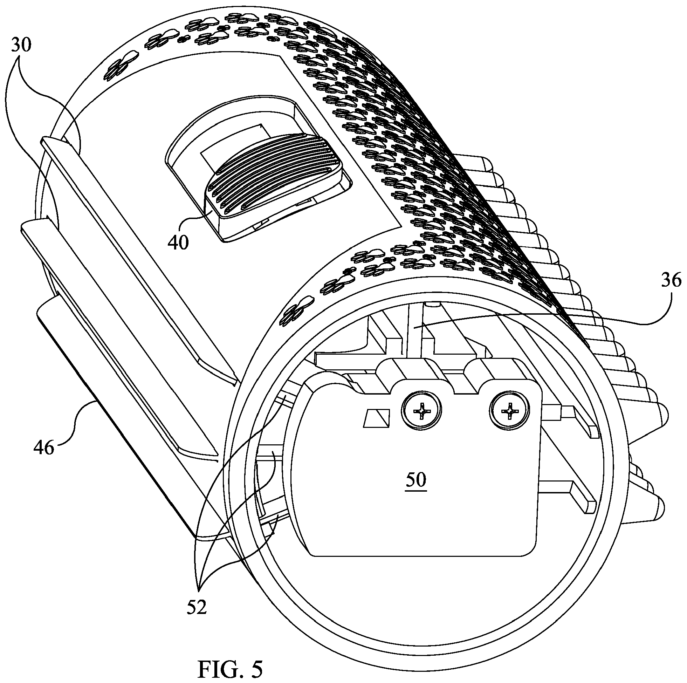

An improved grooming tool constructed in accordance with preferred embodiments of the invention is shown generally as a grooming tool 10 in Figures 1-7. Grooming tool 10 includes an elongated outer surface 12 having a first end 14 and a second end 16 generally opposite the first end 14.

A plurality of protrusions 18 is located at the first end 14. At the second end 16 are one or more blades 20 having blade edges 22. The blades 20 have a predetermined height. The blade edges 22 may be toothed or serrated, or have a specialized edge geometry or toothedness which is adapted specifically for the removal of fur. For example, a hacksaw blade edge shape may be used. The blades 20 extend along the length of the outer surface 12 of the grooming tool 10.

The outer surface 12 of the grooming tool 10 may also be ergonomically contoured for a user's hand. The outer surface may be generally cylindrical, oval, ergonomically advantageous or any other similar general shape.

The blades 20 emerge outwardly from outer surface 12 of the grooming tool 10.

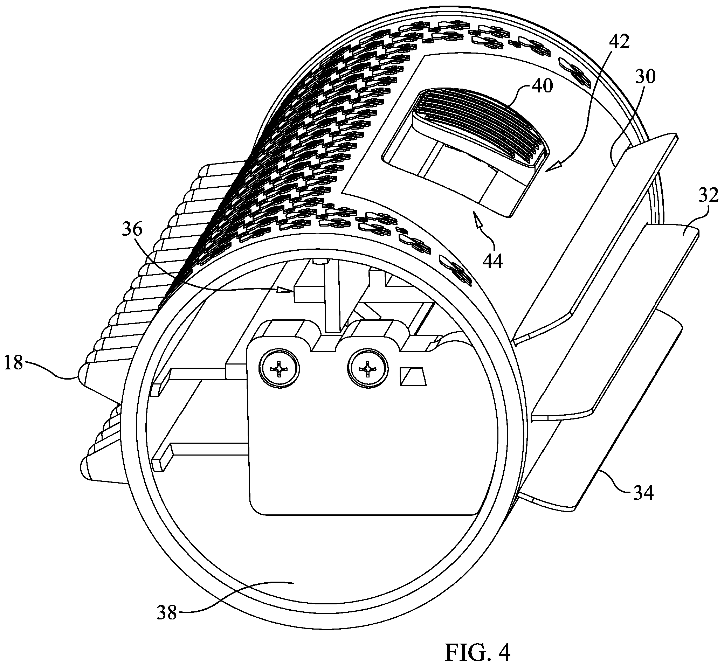

As shown in Figure 1, the protrusions 18 may be conical, pyramidal, or cylindrical in shape or have other known geometry. The protrusions 18 may form a line or be formed into an array. One array of rows is shown in Figure 4, but other arrays known in the art are contemplated. There may be one, two three or more rows in the array, and the protrusions may be aligned in any type of pattern. For example, the array may spell a word or form an image. A protrusion 18 may have a blunted point, as shown or a sharp point. In the array, the protrusions may be approximately 0.3175 to 1.27cm (1/8 to 1/2 inch) in height. In addition, the distance between the protrusions may be approximately 0.3175 to 1.27cm (1/8 to 1/2 inch) in distance. The protrusion height may be approximately the same as the blade height.

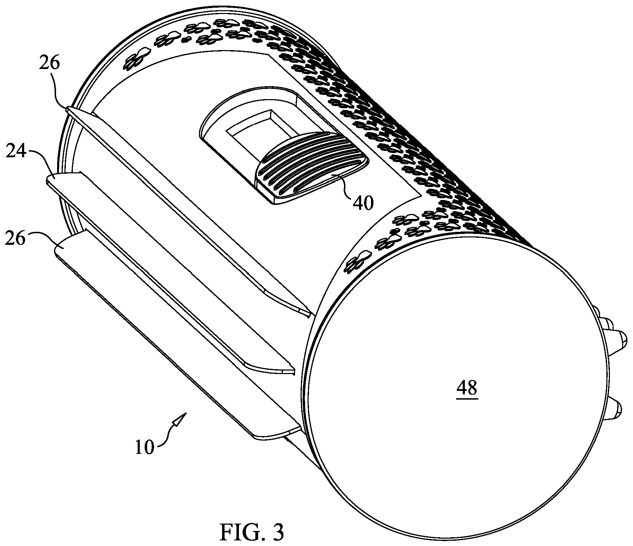

The grooming tool 10 may have one blade 20. The grooming tool may alternatively have multiple blades 20, such as the three blades shown in Figure 3. As shown in Figure 3, the grooming tool 10 may also have one or more central blades 24 and one or more outer blades 26. The outer blades 26 may be angled away from a central blade 24.

In addition, the grooming tool 10 may have texture elements 28 on at least portions of its outer surface 12. The texture elements 28 may be of any shape, such as the paws shown in the figures.

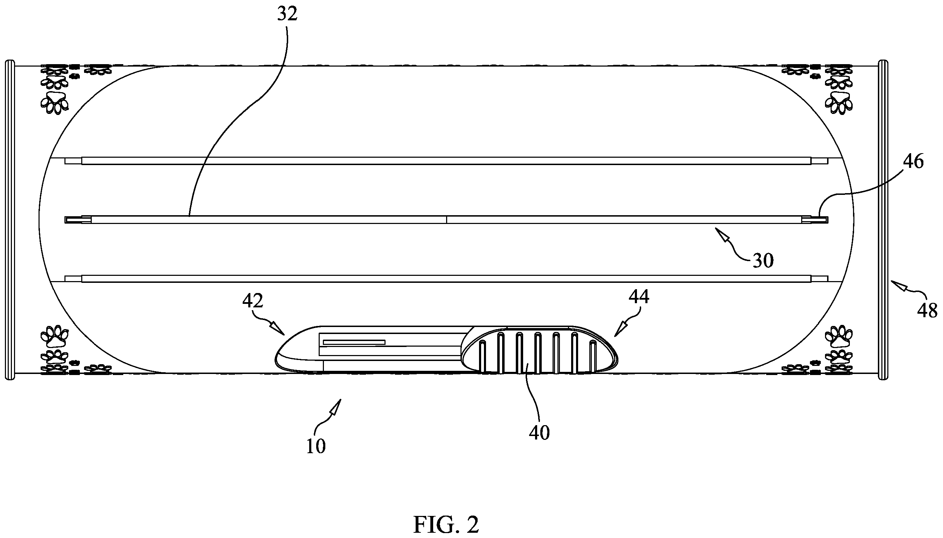

As shown in Figures 2-7, the outer surface 12 of the grooming tool 10 has one or more blade slits 30 located at the second end 16. One or more retractable blades 32, having blade edges 34 such as those described above, are connected to an adjustment mechanism 36 located in an interior region of the grooming tool 10. The adjustment mechanism 36 manipulates the inward and outward direction of the blades 32 relative to the blade slits 30 upon the activation of an actuator 40. As shown, the adjustment mechanism 36 may be attached to the inner surface 38 of the grooming tool 10.

The outer surface includes an actuator 40 in mechanical connection with the adjustment mechanism 36. The actuator 40 as shown in Figures 2-7 is a sliding mechanism, but other actuator mechanisms are known in the art, including electronic actuator mechanisms. The actuator 40 has a blade activation setting 42 for extending the blade and a blade deactivation setting 44 for retracting the blade. The actuator 40 may also have intermediate settings so that the blade edges 34 may be set to intermediate heights relative to the outer surface 12 of the grooming tool 10.

In another embodiment, the actuator 40 may comprise one or more sliding mechanisms located on one or more end surface 48 of the grooming tool 10.

The retractable blades 32 are located near the blade slits 30 and are movable perpendicular to the outer surface 12 of the grooming tool 10 through the blade slits 30 so that the blade edges 34 may extend beyond the outer surface 12 of the grooming tool 10 upon activation.

The blade edges 34 extend through the blade slits 30 to the outer surface 12 of the grooming tool brush 10 when the actuator 40 is at the blade activation setting 42. The blade edges 34 are set to lie below rims 46 of the slits 20 when the blade is retracted.

In another embodiment of the invention, the blades 32 are connected to an adjustment mechanism 36 which in turn is connected to the inner surface 38 of the grooming tool 10. The adjustment mechanism 36 is connected to one or more actuators 40 located on the outer surface 12 of the grooming tool 10. In this configuration the blades 32 are movable in height relative to the outer surface 12 of the grooming tool upon activation of the actuator 40.

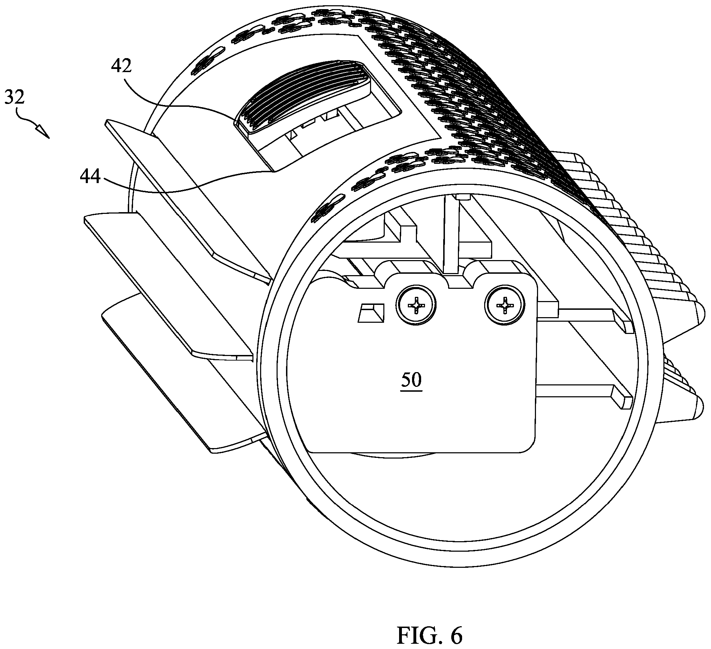

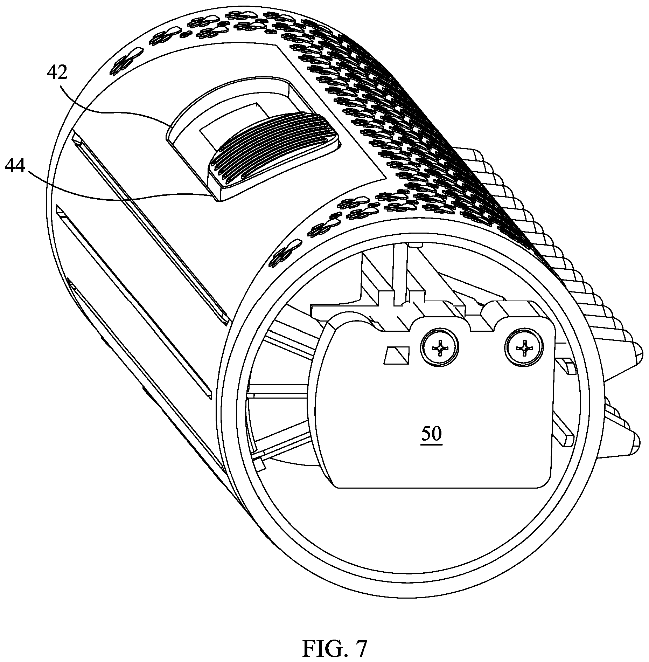

As shown in Figures 6 and 7, the grooming tool 10 may include at least one blade plate 50 located on the inner surface 38 of the grooming tool in fixed connection with one or more bases 52 of blades 32, The blade plate 50 may be in movable connection with the adjustment mechanism 36 which is in movable connection with the actuator 40. Thus, when the adjustment mechanism 36 is activated by the actuator 40, the blade plate 50 is moved and adjusts the height of the blades 32.

In another embodiment, the grooming tool has an elongated generally cylindrical outer surface with a first end, and a second end opposite the first end. The grooming tool also has an inner surface. There are a plurality of protrusions located on the outer surface at the first end, and one or more blade slits extending through the outer surface located at the second end. One or more blades having blade edges are connected to an adjustment mechanism located on the grooming tool. The adjustment mechanism may be on the interior or exterior surface of the grooming tool. An actuator is mechanically connected with the adjustment mechanism. The actuator has a blade activation setting and a blade deactivation setting. The blades are located near the blade slits. The blades are movable perpendicular to the outer surface of the grooming tool through the blade slits. The blades edges extend through the blade slits when the actuator is at the blade activation setting. Outer blades may extend outwardly from one or more central blades. The blade edges are set to lie below a rim of the blade slits when the actuator is at the blade deactivation setting. The actuator includes a sliding mechanism located on the outer surface of the grooming tool, and the blades are in mechanical connection with an adjustment mechanism connected to an inner surface of the grooming tool. The blades are movable in height relative to the outer surface of the grooming tool upon activation of the sliding mechanism. The adjustment mechanism comprises at least one blade plate located on the inner surface of the grooming tool in fixed connection with a base of one or more blades and in movable connection with the sliding mechanism.

The invention is used as follows. The user moves the actuator on the grooming tool to move the blades to a predetermined height. The user then holds the elongated surface of the grooming tool. The user moves the blades from the grooming tool on an animal and remove fur from an animal. Fur may then be stuck to or in the blades. The user then moves the actuator on the grooming tool to the blade deactivation setting, lowering the blades so that they lie at or below the surface of the grooming tool. The user then wipes or blows the removed fur from the grooming tool. With the blades in the blade deactivation setting, the user may quickly and efficiently use the protrusions on the grooming tool on the animal to soothe the animal and remove additional fur. The user may alternatively use the protrusions before using the blades on the animal. The user may alternate sides of the grooming tool against the fur. Thus a user may use both the protrusion surface and the blades of the invention while holding it in one hand, so that the user may use the other hand to control the animal, if necessary.

The user may use the grooming tool by moving the grooming tool through the animal's fur in the direction in which the fur grows.

It will thus be seen that the objects set forth above, among those made apparent from the preceding description, are efficiently attained and, since certain changes may be made in carrying out the above method and in the article set forth without departing from the scope of the invention, it is intended that all matter contained in the above description and shown in the accompanying drawings shall be interpreted as illustrative and not in a limiting sense.

It is also to be understood that the following claims are intended to cover all of the generic and specific features of the invention herein described and all statements of the scope of the invention which, as a matter of language, might be said to fall therebetween. A variety of modifications and variations are possible in light of the above teachings without departing from the scope of the invention as defined by the appended claims.

## Claims

1. A grooming tool (10), comprising:
a. an elongated outer surface (12) having
i. first end, and
ii. a second end opposite the first end,
b. an inner surface (38),
c. a plurality of protrusions (18) located on the outer surface at the first end,
d. one or more blade slits (30) located at the second end extending through the outer surface, and
e. one or more blades (32) extending along the length of the outer surface and having blade edges (34)
**characterized in that** the blade edges (34) are
connected to an adjustment mechanism (36) located on the grooming tool, and **in that** the grooming tool (10) further comprises:
f. an actuator (40), in mechanical connection with the adjustment mechanism, having a blade activation setting wherein the blade edges extend above a rim of the one or more slits when the actuator is at the blade activation setting and a blade deactivation setting wherein the blade edges lie below the rim of the one or more slits when the actuator is at the blade deactivation setting,
g. wherein the blade is movable perpendicular to the outer surface of the grooming tool through the blade slit.

2. The grooming tool of claim 1, wherein the outer surface is ergonomically contoured for a user's hand.

3. The grooming tool of claim 1, wherein the outer surface is cylindrical.

4. The grooming tool of claim 3, wherein the one or more blades extend longitudinally along the cylindrical outer surface.

5. The grooming tool of claim 1, wherein the grooming tool includes a oval cross section.

6. The grooming tool of claim 1**,** wherein the protrusions have a predetermined height and are formed into an array.

7. The grooming tool of claim 6, wherein the protrusion height is approximately the same as the blade height when the actuator is at the blade activation setting.

8. The grooming tool of claim 1, wherein the one or more blades comprise at least one each of a central blade (24) and an outer blade (26), and wherein the outer blade is angled outwardly from the central blade.

9. The grooming tool of claim 1, wherein the actuator comprises a sliding mechanism located on the outer surface of the grooming tool.

10. The grooming tool of claim 9, further comprising
a. a first end surface, and
b. a second end surface,
c. wherein the actuator is located on at least one of the first end surface and the second end surface.

11. The grooming tool of claim 1,
wherein the adjustment mechanism (36) is connected to an inner surface (38) of the grooming tool,
wherein the actuator (40) is located on the outer surface of the grooming tool (10), and
wherein the one or more blades are movable in height with relation to the outer surface of the grooming tool upon activation of the actuator.

12. The grooming tool of claim 11, wherein the actuator (40) comprises a sliding mechanism located on the outer surface of the grooming tool (10), wherein the grooming tool (10) further comprising at least one blade plate (50) located on the inner surface of the grooming tool in fixed connection with a base (52) of the at least one blade (32) and in movable connection with the sliding mechanism.

13. A method for grooming animals and removing fur, comprising the steps of:
a. providing the grooming tool (10) of claim 1 , and
b. moving the grooming tool through an animal's fur.

## Patentansprüche

1. Pflegewerkzeug (10), umfassend:
a. eine längliche Außenfläche (12) mit
i. einem ersten Ende und
ii.einem zweiten Ende gegenüber dem ersten Ende,
b. eine Innenfläche (38),
c. eine Vielzahl von Vorsprüngen (18), die sich auf der Außenfläche an dem ersten Ende befindet,
d. einen oder mehrere Klingenschlitze (30), die sich an dem zweiten Ende befinden und durch die Außenfläche erstrecken, und
e. eine oder mehrere Klingen (32), die sich entlang der Länge der Außenfläche erstrecken und Klingenkanten (34) aufweisen,
**dadurch gekennzeichnet, dass** die Klingenkanten (34) mit einem Einstellmechanismus (36) verbunden sind, der sich auf dem Pflegewerkzeug befindet, und dadurch, dass das Pflegewerkzeug (10) ferner umfasst:
f. einen Aktor (40), der in mechanischer Verbindung mit dem Einstellmechanismus steht und eine Klingenaktivierungseinstellung aufweist, wobei sich die Klingenkanten über einen Rand des einen oder der mehreren Schlitze erstrecken, wenn der Aktor in der Klingenaktivierungseinstellung ist, und eine Klingendeaktivierungseinstellung, wobei die Klingenkanten unterhalb des Randes des einen oder der mehreren Schlitze liegen, wenn der Aktor in der Klingendeaktivierungsstellung ist,
g. wobei die Klinge senkrecht zur Außenfläche des Pflegewerkzeugs durch den Klingenschlitz beweglich ist.

2. Pflegewerkzeug nach Anspruch 1, wobei die Außenfläche ergonomisch für die Hand eines Benutzers geformt ist.

3. Pflegewerkzeug nach Anspruch 1, wobei die Außenfläche zylindrisch ist.

4. Pflegewerkzeug nach Anspruch 3, wobei sich die eine oder die mehreren Klingen in Längsrichtung entlang der zylindrischen Außenfläche erstrecken.

5. Pflegewerkzeug nach Anspruch 1, wobei das Pflegewerkzeug einen ovalen Querschnitt beinhaltet.

6. Pflegewerkzeug nach Anspruch 1,
wobei die Vorsprünge eine vorgegebene Höhe aufweisen und zu einer Anordnung ausgebildet sind.

7. Pflegewerkzeug nach Anspruch 6, wobei die Vorsprungshöhe ungefähr gleich wie die Klingenhöhe ist, wenn der Aktor in der Klingenaktivierungseinstellung ist.

8. Pflegewerkzeug nach Anspruch 1, wobei die eine oder die mehreren Klingen mindestens jeweils eine von einer mittleren Klinge (24) und einer äußeren Klinge (26) umfassen und wobei die äußere Klinge von der mittleren Klinge nach außen abgewinkelt ist.

9. Pflegewerkzeug nach Anspruch 1, wobei der Aktor einen Gleitmechanismus umfasst, der sich auf der Außenfläche des Pflegewerkzeugs befindet.

10. Pflegewerkzeug nach Anspruch 9, ferner umfassend:
a. eine erste Endfläche und
b. eine zweite Endfläche,
c. wobei sich der Aktor auf mindestens einer von der ersten Endfläche und der zweiten Endfläche befindet.

11. Pflegewerkzeug nach Anspruch 1,
wobei der Einstellmechanismus (36) mit einer Innenfläche (38) des Pflegewerkzeugs verbunden ist,
wobei sich der Aktor (40) auf der Außenfläche des Pflegewerkzeugs (10) befindet, und
wobei die eine oder die mehreren Klingen bei Aktivierung des Aktors in Bezug auf die Außenfläche des Pflegewerkzeugs in der Höhe beweglich sind.

12. Pflegewerkzeug nach Anspruch 11, wobei der Aktor (40) einen Gleitmechanismus umfasst, der sich auf der Außenfläche des Pflegewerkzeugs (10) befindet, wobei das Pflegewerkzeug (10) ferner mindestens eine Klingenplatte (50) umfasst, die sich auf der Innenfläche des Pflegewerkzeugs in fester Verbindung mit einer Basis (52) der mindestens einen Klinge (32) und in beweglicher Verbindung mit dem Gleitmechanismus befindet.

13. Verfahren zum Pflegen von Tieren und Entfernen von Fell, umfassend die folgenden Schritte:
a. Bereitstellen des Pflegewerkzeugs (10) nach Anspruch 1 und
b. Bewegen des Pflegewerkzeugs durch das Fell eines Tieres.

## Revendications

1. Outil de toilettage (10), comprenant :
a. une surface externe allongée (12) présentant
i. une première extrémité, et
ii. une seconde extrémité opposée à la première extrémité,
b. une surface interne (38),
c. une pluralité de saillies (18) situées au niveau de la première extrémité de la surface externe,
d. une ou plusieurs fentes pour lames (30) situées au niveau de la seconde extrémité s'étendant à travers la surface externe, et
e. une ou plusieurs lames (32) s'étendant sur toute la longueur de la surface externe et présentant des bords de lame (34)
**caractérisé en ce que** les bords de lame (34) sont reliés à un mécanisme de réglage (36) situé sur l'outil de toilettage, et **en ce que** l'outil de toilettage (10) comprend en outre :
f. un actionneur (40), en liaison mécanique avec le mécanisme de réglage, présentant un réglage d'activation de lame dans lequel les bords de lame s'étendent au-dessus d'un rebord des une ou plusieurs fentes lorsque l'actionneur est au niveau du réglage d'activation de lame et au niveau d'un réglage de désactivation de lame dans lequel les bords de lame se trouvent sous le rebord des une ou plusieurs fentes lorsque l'actionneur est au niveau du réglage de désactivation de lame,
g. dans lequel la lame est mobile perpendiculairement à la surface externe de l'outil de toilettage à travers la fente pour lame.

2. Outil de toilettage selon la revendication 1, dans lequel la surface externe est profilée de manière ergonomique pour la main d'un utilisateur.

3. Outil de toilettage selon la revendication 1, dans lequel la surface externe est cylindrique.

4. Outil de toilettage selon la revendication 3, dans lequel les une ou plusieurs lames s'étendent de manière longitudinale le long de la surface externe cylindrique.

5. Outil de toilettage selon la revendication 1, dans lequel l'outil de toilettage comporte une section transversale ovale.

6. Outil de toilettage selon la revendication 1, dans lequel les saillies présentent une hauteur prédéterminée et sont formées en un réseau.

7. Outil de toilettage selon la revendication 6, dans lequel la hauteur de saillie est approximativement la même que la hauteur de lame lorsque l'actionneur est au niveau du réglage d'activation de lame.

8. Outil de toilettage selon la revendication 1, dans lequel les une ou plusieurs lames comprennent au moins une lame centrale (24) et au moins une lame externe (26), et dans lequel la lame externe est inclinée vers l'extérieur par rapport à la lame centrale.

9. Outil de toilettage selon la revendication 1, dans lequel l'actionneur comprend un mécanisme coulissant situé sur la surface externe de l'outil de toilettage.

10. Outil de toilettage selon la revendication 9, comprenant en outre
a. une première surface d'extrémité, et
b. une seconde surface d'extrémité,
c. dans lequel l'actionneur est situé sur au moins l'une parmi la première surface d'extrémité et la seconde surface d'extrémité.

11. Outil de toilettage selon la revendication 1,
dans lequel le mécanisme de réglage (36) est relié à une surface interne (38) de l'outil de toilettage,
dans lequel l'actionneur (40) est situé sur la surface externe de l'outil de toilettage (10), et
dans lequel les une ou plusieurs lames sont mobiles en hauteur par rapport à la surface externe de l'outil de toilettage lors de l'activation de l'actionneur.

12. Outil de toilettage selon la revendication 11, dans lequel l'actionneur (40) comprend un mécanisme coulissant situé sur la surface externe de l'outil de toilettage (10), dans lequel l'outil de toilettage (10) comprend en outre au moins une plaque de lame (50) située sur la surface interne de l'outil de toilettage en liaison fixe avec une base (52) de l'au moins une lame (32) et en liaison mobile avec le mécanisme coulissant.

13. Procédé de toilettage d'animaux et de retrait de fourrure, comprenant les étapes suivantes :
a. la fourniture de l'outil de toilettage (10) selon la revendication 1, et
b. le déplacement de l'outil de toilettage à travers la fourrure d'un animal.
